# FASCICULE DE BREVET EUROPEEN

(11) **EP 4 275 374 B1**
(45) Date de publication et mention de la délivrance du brevet: **15.04.2026**
(21) Numéro de dépôt: 21851688.8
(22) Date de dépôt: 29.12.2021
(51) Int. Cl.: H04L 9/40, H04W 12/06, H04W 12/08, H04L 67/52, H04L 67/51, H04W 12/72, H04L 67/141, H04L 67/306, H04W 76/11, H04W 76/12, H04W 76/18

(54) **PROCEDE DE GESTION DE DEMANDE D'ACTIVATION D'UNE SESSION DE DONNEES PAQUET POUR UN TERMINAL**
VERFAHREN ZUR VERWALTUNG EINER ANFRAGE ZUR AKTIVIERUNG EINER PAKETDATENSITZUNG FÜR EIN ENDGERÄT
METHOD FOR MANAGING A REQUEST TO ACTIVATE A PACKET DATA SESSION FOR A TERMINAL

(30) Priorité: 08.01.2021 FR 2100174
(43) Date de publication de la demande: 15.11.2023
(73) Titulaire: Orange, 92130 Issy-les-Moulineaux (FR)
(72) Inventeur: LATASTE, Sandrine, 92326 CHÂTILLON CEDEX (FR); TSANG KWONG U, Steve, 92326 CHÂTILLON CEDEX (FR)
(74) Mandataire: Vidon Brevets & Stratégie
(86) Numéro de dépôt international: PCT/FR2021/052463
(87) Numéro de publication internationale: WO 2022/148919

(56) Documents cités:
- "3rd Generation Partnership Project; Technical Specification Group Services and System Aspects; Procedures for the 5G System (5GS); Stage 2 (Release 15)", vol. SA WG2, no. V15.12.0, 17 December 2020 (2020-12-17), pages 1 - 365, XP051999817, Retrieved from the Internet <URL:https://ftp.3gpp.org/Specs/latest/Rel-15/23_series/23502-fc0.zip 23502-fc0.docx> [retrieved on 20201217]
- "3rd Generation Partnership Project; Technical Specification Group Services and System Aspects; System architecture for the 5G System (5GS); Stage 2 (Release 16)", 20 March 2020 (2020-03-20), XP051867360, Retrieved from the Internet <URL:https://ftp.3gpp.org/tsg_sa/WG2_Arch/Latest_SA2_Specs/DRAFT_INTERIM/23501-g40_Waiting_23501_CR2179_CRs_Implemented_CR2195Fix_R2.zip 23501-g40_Waiting_23501_CR2179_CRs_Implemented_CR2195Fix_R2.docx> [retrieved on 20200320]

## Description

### Domaine technique

L'invention se situe dans les réseaux de communications, et notamment dans les réseaux dans lesquels sont instanciées des tranches de réseaux (en anglais network slice), permettant de dédier des équipements/fonctions/configurations réseau de communications pour des services spécifiques et/ou des clients spécifiques et/ou des terminaux spécifiques.

L'invention vise plus particulièrement à gérer les demandes, d'un terminal utilisateur, d'activation de session de données paquet pour une tranche d'un tel réseau.

### Art antérieur

Certaines architectures de réseau aujourd'hui spécifiées et déployées sont structurées en tranches de réseau permettant à un terminal utilisateur, selon la souscription de l'utilisateur, de bénéficier de fonctions spécifiques (d'acheminement, de traitement, d'administration ...) adaptées à un ou plusieurs critères parmi le type de terminal, le type d'application, le type d'accès, etc... Ainsi, chaque tranche permet d'offrir un niveau de qualité de service et de sécurité conformément à un ou plusieurs critères cités ci-dessus. Il est en outre à noter que les clients et les terminaux sont d'une part de plus en plus diversifiés (terminaux loT (en anglais Internet of Things), smartphones, robots, variété d'équipements dits communicants...) et d'autre part disposant de capacités et de besoins assez différents. Cette évolution s'accompagne en outre d'une capacité d'au moins une partie de ces terminaux à pouvoir accéder simultanément ou pas à une pluralité d'applications dont les données sont possiblement acheminées sur des tranches de réseau distinctes. Il est à noter que ces évolutions visent aussi bien les réseaux fixes que les réseaux mobiles et que les spécifications des réseaux dits de cinquième génération (5G) intègrent cette structuration en tranches de réseaux.

Selon les spécifications des réseaux 5G auxquelles il sera particulièrement fait référence dans la suite de cette description, un terminal utilisateur stocke localement les identifiants de tranches S-NSSAI (en anglais Single-Network Slice Selection Assistance Information) auxquelles l'utilisateur a souscrit (les S-NSSAI souscrites étant référencées dans une donnée notée, en anglais, Configured NSSAI). Le terminal utilisateur stocke également les identifiants de tranches pour lesquelles le terminal est autorisé à activer une ou des sessions de données paquet, par le réseau et notamment via une entité notée AMF (en anglais Access and Mobility Function), dans une donnée notée, en anglais, Allowed NSSAI, contenant tout ou partie des S-NSSAI souscrites). Le terminal utilisateur stocke également les identifiants de tranches qui lui sont interdites (par le réseau) dans une donnée notée, en anglais, Rejected NSSAI. Ces identifiants de tranches autorisées/rejetées sont reçus par le terminal dans la réponse d'acceptation du réseau lors de sa procédure d'enregistrement auprès du réseau.

De même, un équipement du réseau stocke une information de contexte associé au terminal utilisateur (en anglais UE Context), pendant la procédure d'enregistrement, cette information de contexte contenant notamment les identifiants de tranches autorisées (Allowed NSSAI) ainsi qu'un état d'enregistrement du terminal utilisateur (en anglais RM State).

On peut noter qu'il n'existe pas de cohérence entre les informations stockées au niveau d'un terminal et celles stockées au niveau du réseau, les identifiants de tranches rejetées (Rejected NSSAI) n'étant par exemple pas stockés au niveau réseau, et l'information de contexte du terminal utilisateur (UE Context) n'étant pas stockée au niveau du terminal utilisateur.

Par ailleurs, lors d'un enregistrement suivant, le terminal utilisateur analyse d'abord les identifiants de tranches rejetées (Rejected NSSAI) afin de ne pas redemander l'enregistrement d'une tranche rejetée lors de l'enregistrement précédent, pour un même type d'accès et une même zone d'enregistrement. Ensuite, au moment de l'activation d'une session de données paquet (en anglais PDU session pour la 5G, avec PDU pour Protocol Data Unit), le terminal utilisateur analyse les identifiants de tranches autorisées (Allowed NSSAI) afin de n'activer des sessions PDU que pour des tranches autorisées. Ainsi, selon les spécifications actuelles, le terminal utilisateur ne peut pas activer une session de données paquet sur une tranche non présente parmi les tranches autorisées précédemment.

De plus, lors de l'activation d'une session de données paquet, le réseau, via une entité notée SMF (en anglais Session Management Function), contrôle la validité de la demande d'activation de session de données paquet au regard de sa politique locale et des droits de souscription associés à l'utilisateur. En revanche, l'entité SMF ne contrôle pas si la tranche demandée est autorisée ou non pour le type d'accès et la zone d'enregistrement en cours, car ce contrôle est mis en œuvre au moment de l'enregistrement par l'entité réseau AMF précitée.

Ainsi, l'usage des informations de tranches n'est pas cohérent non plus, certaines informations stockées n'étant jamais utilisées au moment de l'activation de session de données paquet, comme par exemple les identifiants de tranches autorisées ou rejetées stockées au niveau du réseau.

Les spécifications comptent sur un traitement correct au niveau du terminal (pour choisir les tranches à demander dans la requête d'enregistrement ou une tranche autorisée à demander dans la requête d'activation de session de données paquet) et ne traitent pas par exemple du cas d'un terminal utilisateur mal configuré ou mal utilisé qui demanderait l'activation d'une session de données paquet pour une tranche qui n'a pas été autorisée lors de la procédure d'enregistrement.

Par ailleurs, il est possible, selon l'état de la technique, que l'utilisation d'une tranche soit en réalité autorisée pour le terminal utilisateur mais que le réseau n'en ait pas connaissance lorsqu'il reçoit la demande d'activation de session de données paquet parce que l'enregistrement n'a pas été fait préalablement pour cette tranche (les tranches autorisées/ rejetées sont déterminées par le réseau lors de la procédure d'enregistrement, parmi les tranches demandées par le terminal utilisateur dans sa requête d'enregistrement).

Les documents "3rd Generation Partnership Project; Technical Specification Group Services and System Aspects; Procedures for the 5G System (5GS); Stage 2 (Release 15)", , vol. SA WG2, no. V15.12.0 17 décembre 2020 (2020-12-17), pages 1-365, XP051999817, et "3rd Generation Partnership Project; Technical Specification Group Services and System Aspects; System architecture for the 5G System (5GS); Stage 2 (Release 16)", , 20 mars 2020 (2020-03-20), XP051867360, font partie de l'état de l'art pertinent.

Les principaux inconvénients des spécifications et techniques actuelles résident donc dans le fait que les informations relatives aux tranches de réseau, stockées par le réseau et/ou l'équipement utilisateur, ne sont pas toutes prises en compte par le réseau, engendrant à la fois un stockage inutile, un contrôle d'usage de tranches insuffisant et une limitation dans les usages par non utilisation d'informations pourtant accessibles.

Il existe donc un besoin pour une technique permettant une meilleure gestion des informations de tranches de réseau à la fois au niveau de l'équipement utilisateur et au niveau du réseau, tout en permettant une applicabilité en 5G ainsi que toute future génération de réseaux utilisant une architecture structurée en tranches de réseau.

### Exposé de l'invention

L'invention répond à ce besoin en proposant un procédé de gestion de demande d'activation d'une session de données paquet pour un terminal utilisateur apte à émettre et recevoir des données sur un réseau de communications organisé en tranches de réseau, le terminal utilisateur comprenant un identifiant de souscription pour au moins une des tranches du réseau, le procédé étant mis en œuvre par un au moins un équipement réseau, et comprenant :
- une réception d'une requête d'activation d'une session de données paquet en provenance du terminal utilisateur pour une tranche du réseau, la requête d'activation comprenant un identifiant de la tranche demandée, obtenu à partir d'un paramètre comprenant un ou plusieurs identifiants de tranche(s) souscrite(s) par l'utilisateur, la requête d'activation étant indépendante d'une autorisation ou d'un rejet de la tranche demandée (Sli) déterminé(e) lors de l'enregistrement du terminal utilisateur auprès du réseau;
- une obtention, à partir de l'identifiant de souscription, d'au moins une information permettant de déterminer une autorisation de la tranche demandée ;
- une vérification d'autorisation de la tranche demandée en tenant compte de l'au moins une information permettant de déterminer une autorisation de la tranche demandée obtenue et, si la vérification est négative, un rejet de la requête d'activation d'une session de données paquet pour la tranche demandée.

Ainsi, la présente technique repose sur une approche tout à fait nouvelle et inventive de la procédure d'activation de session de données paquet pour un terminal utilisateur pour une tranche d'un réseau de communication, consistant à effectuer la vérification d'autorisation pour une tranche demandée, et le cas échéant l'authentification de la tranche demandée, à réception de la requête d'activation de la session de données paquet, et s'affranchit dans certains modes de réalisation du test d'autorisation prévu au moment de la procédure préalable d'enregistrement du réseau dans les techniques de l'art antérieur. De plus, la vérification d'autorisation est effectuée pour une seule tranche, pour laquelle le terminal utilisateur a émis une requête d'activation de session de données paquet, et non plus pour une ou plusieurs tranches comme c'est le cas lors de l'enregistrement d'un terminal utilisateur selon l'art antérieur.

Cette approche permet notamment de proposer une procédure simplifiée de l'enregistrement d'un terminal utilisateur au cours de laquelle aucune vérification d'autorisation de tranche n'est mise en œuvre, ni par l'équipement utilisateur ni par le réseau, s'affranchissant ainsi, dans un premier mode de réalisation, du stockage de certaines informations relatives aux tranches auxquelles l'équipement utilisateur souhaite pouvoir accéder. De plus, le fait de ne pas gérer, au niveau du réseau notamment, ces informations d'autorisation de tranches associées à un équipement utilisateur permet au réseau, et notamment à l'équipement de contrôle d'accès, par exemple l'entité AMF selon le standard en vigueur (en anglais Access and Mobility Management Function), de recevoir et de traiter plus de sollicitations en provenance de plus d'équipements utilisateurs.

En effet, selon les spécifications actuelles et la technique antérieure, un équipement utilisateur ne peut pas demander une activation de session de données paquet sans avoir vérifié au préalable que la tranche souhaitée a bien été autorisée lors d'une procédure d'enregistement préalable. Pour ce faire, il doit donc stocker ces informations d'autorisation/rejet de tranches. De même, côté réseau, une vérification doit être effectuée concernant l'autorisation de chaque tranche à laquelle un équipement utilisateur souhaitera potentiellement accéder, en fonction de la localisation du terminal utilisateur au moment de sa requête d'enregistrement. De ce fait, le réseau doit également informer l'équipement utilisateur de tout changement d'état pour une tranche en fonction de la localisation courante de l'équipement utilisateur. Toutes ces étapes et tous ces stockages non effectués grâce à la technique proposée permettent des économies d'énergie et de capacités de stockage, tant au niveau de l'équipement utilisateur qu'au niveau du réseau, ainsi que des gains de temps ayant un impact positif directement sur l'expérience utilisateur.

Ainsi, l'entité réseau recherche, à partir d'un identifiant de souscription associé au terminal utilisateur, les données de souscription pour retrouver au moins les tranches souscrites, ou bien, selon différents modes de réalisation, directement des informations relatives à l'autorisation ou au rejet de la tranche demandée. Ainsi, grâce à l'identifiant de souscription, stocké par exemple dans la carte SIM du terminal utilisateur, l'entité réseau peut obtenir une information lui permettant de déterminer, ensuite, si une tranche est autorisée ou rejetée.

Ainsi, l'identifiant de souscription (par exemple le SUPI pour Subscription Permanent Identifier, en anglais) stocké dans le terminal utilisateur (dans sa carte SIM), permet d'accéder à un équipement réseau de gestion de données de souscription (par exemple l'entité UDM selon le standard en vigueur, en anglais Unified Data Management, stockant lui-même ces données de souscription ou apte à les obtenir d'une ou plusieurs autres entités telles que UDR, en anglais Unified Data Repository assurant leur stockage) pour obtenir les tranches souscrites et ainsi en vérifier l'autorisation, selon un premier mode de réalisation, ou permet, selon d'autres modes de réalisation, d'accéder à un paramètre de contexte (par exemple UE Context pour User Equipment Context en anglais) associé au terminal utilisateur, référençant les tranches autorisées et/ou rejetées lors de la procédure d'enregistrement ou d'obtenir de l'équipement réseau de gestion de données de souscription les tranches autorisées et/ou rejetées.

L'entité réseau mettant en œuvre les étapes du procédé peut correspondre à une entité réseau de contrôle d'accès (exemple l'entité AMF) ou à une entité réseau de contrôle de session, par exemple l'entité SMF (en anglais Session Management Function). Certaines étapes peuvent être mises en œuvre par l'une ou l'autre de ces entités, ou peuvent être toutes mises en œuvre par une entité de type AMF ou de type SMF.

Selon un aspect du procédé de gestion de demande d'activation d'une session de données paquet, la réception de la requête d'activation est mise en œuvre par un équipement réseau de contrôle d'accès et les autres étapes sont mises en œuvre par un équipement réseau de contrôle d'accès ou un équipement réseau de contrôle de session.

Selon un aspect du procédé de gestion de demande d'activation d'une session de données paquet, la vérification d'autorisation de la tranche demandée tient compte galement d'au moins une donnée relative à une localisation courante du terminal utilisateur et/ou un type d'accès utilisé par le terminal utilisateur.

Ainsi, l'entité réseau tient également compte, en plus de données de souscription, d'une donnée relative à la localisation du terminal utilisateur (par exemple lorsqu'il s'agit d'un terminal mobile) et/ ou du type d'accès utilisé par le terminal utilisateur.

Selon un aspect, le procédé de gestion de demande d'activation d'une session de données paquet comprend, si la vérification d'autorisation de la tranche est positive et si une donnée de souscription comprend un indicateur requérant l'authentification de la tranche autorisée, une authentification de la tranche autorisée, et :
- si l'authentification est positive, une poursuite de la procédure de gestion de demande d'activation de la session de données paquet pour la tranche autorisée ;
- si l'authentification est négative, un rejet de la requête d'activation d'une session de données paquet pour la tranche autorisée.

Ainsi, selon ce premier mode de réalisation, si les données de souscription relatives à la tranche autorisée requièrent une authentification de cette tranche, le procédé met en œuvre cette authentification, avant de poursuivre la procédure d'activation de la session de données paquet. Cela permet notamment d'éviter de mette en œuvre l'étape de sélection d'un équipement réseau de contrôle de session ou SMF (en anglais Session Management Function) si la tranche n'est pas authentifiée. Si l'authentification échoue, la requête d'activation de session de données paquet pour la tranche demandée est rejetée, sinon, la procédure d'activation de session de données paquet continue.

Selon un aspect, le procédé de gestion de demande d'activation d'une session de données paquet comprend, avant la vérification d'autorisation de la tranche et si une donnée de souscription comprend un indicateur requérant l'authentification de la tranche, une authentification de la tranche demandée, et si l'authentification est négative, un rejet de la requête d'activation d'une session de données paquet pour la tranche demandée.

Ainsi, selon ce deuxième mode de réalisation, si les données de souscription, relatives à la tranche pour laquelle le terminal utilisateur demande une activation de session de données paquet, requièrent une authentification de cette tranche, cette authentification est mise en œuvre avant la vérification de l'autorisation de la tranche. Cela permet de rejeter directement la requête d'activation de la tranche si l'authentification échoue, ou de continuer avec la vérification de l'autorisation de la tranche lorsque cette dernière est authentifiée.

Selon un aspect du procédé de gestion de demande d'activation d'une session de données paquet, l'obtention comprend une émission d'une requête d'interrogation à destination d'un équipement réseau de gestion de données de souscription, la requête comprenant l'dentifiant de souscription, et une réception d'une réponse de l'équipement réseau de gestion de données de souscription comprenant l'au moins une information permettant de déterminer une autorisation de la tranche demandée.

Ainsi, la ou les informations nécessaires à la vérification de l'autorisation, et, le cas échéant, à l'authentification, de la tranche pour laquelle le terminal utilisateur demande l'activation d'une session de données paquet, sont obtenues en interrogeant un équipement réseau de gestion de données de souscription, par exemple appelée UDM selon le standard en vigueur (en anglais Unified Data Management). Cette interrogation est mise en œuvre si l'équipement de contrôle d'accès du réseau (par exemple l'AMF) n'a pas à sa disposition ces données de souscription notamment s'il ne les a pas stockées localement lors de la procédure d'enregistrement. Cette interrogation de l'équipement réseau de gestion de données de souscription comprend notamment un identifiant de souscription (par exemple l'identifiant SUPI, en anglais Subscription Permanent Identifier), stocké par le terminal utilisateur, de manière à pouvoir retrouver les informations de souscriptions relatives à l'utilisateur pour la tranche demandée. Dans certaines variantes, l'entité réseau interroge l'équipement réseau de gestion de données de souscription pour retrouver directement les tranches autorisées/tranches rejetées.

Selon un aspect du procédé de gestion de demande d'activation d'une session de données paquet, la vérification d'autorisation de la tranche comprend une émission d'une requête d'interrogation à destination d'un équipement réseau de sélection d'instance de tranche, la requête comprenant au moins l'identifiant de la tranche demandée et une donnée de souscription comprenant les identifiants des tranches souscrites, et une réception d'une réponse de l'équipement réseau de sélection d'instance de tranche comprenant une information représentative d'une autorisation ou d'un rejet pour la tranche demandée.

Ainsi, si l'équipement réseau (par exemple AMF ou SMF) n'a pas accès aux données lui permettant d'autoriser ou de rejeter la tranche demandée, une requête est émise à destination d'une autre entité du réseau, par exemple l'entité NSSF (en anglais Network Slice Selection Function), en lui fournissant notamment les données de souscription préalablement obtenues (avec les identifiants des tranches souscrites) et l'identifiant de la tranche demandée (il est à noter que l'information de la localisation courante est utile aussi pour l'autorisation sur un accès 3GPP). Cette variante permet notamment de pouvoir mettre en œuvre la vérification de l'autorisation même lorsque l'AMF ou le SMF ne dispose pas directement des données pour ce faire.

La réponse de l'équipement réseau de sélection d'instance de tranche peut par exemple contenir la tranche demandée dans un paramètre tel que la variable Allowed NSSAI ou la variable Rejected NSSAI selon que la tranche est autorisée ou rejetée (dans le cas où elle est rejetée ce peut être pour tout le réseau mobile terrestre public (PLMN, en anglais Public Land Mobile Network) ou la localisation courante du terminal utilisateur).

Selon un aspect du procédé de gestion de demande d'activation d'une session de données paquet, l'autorisation de la tranche est suivie d'une sélection d'un équipement réseau de contrôle de session et d'un contrôle, par l'équipement réseau de contrôle de session sélectionné, de la validité de la requête d'activation d'une session de données paquet pour le terminal utilisateur et la tranche autorisée, tenant compte de l'au moins une donnée de souscription et d'une politique locale de l'équipement réseau de contrôle de session sélectionné.

Ainsi, selon ce mode de réalisation, la procédure d'activation d'une session de données paquet continue, une fois la tranche demandée autorisée et, le cas échéant, authentifiée, avec la mise en œuvre de l'étape classique de sélection, par un équipement en charge de la gestion d'accès, d'un équipement en charge du contrôle de la session. Cette étape est donc mise en œuvre soit à la suite de la vérification d'autorisation de la tranche demandée, soit à la suite de l'authentification de la tranche autorisée. Or, classiquement selon l'art antérieur, l'étape d'authentification de tranche est la dernière étape de la procédure d'enregistrement, donc suivie d'aucune étape, et l'étape de vérification d'autorisation, également mise en œuvre pendant la procédure d'enregistrement, n'est pas non plus suivie par une étape de sélection de l'équipement de contrôle de session, ou SMF, cette étape étant mise en œuvre lors de la procédure d'activation d'une session de données paquet.

Selon une première variante du procédé de gestion de demande d'activation d'une session de données paquet pour un terminal, la vérification d'autorisation de la tranche demandée comprend une recherche de l'identifiant de la tranche demandée parmi une liste d'identifiants de tranches préalablement autorisées associées à la donnée de souscription et
- si la recherche est positive, poursuite de la procédure d'activation de la session de données paquet,
- si la recherche est négative, résultat de vérification négatif.

Selon une deuxième variante du procédé de gestion de demande d'activation d'une session de données paquet pour un terminal, la vérification d'autorisation de la tranche demandée comprend une recherche de l'identifiant de la tranche demandée parmi une liste d'identifiants de tranches préalablement autorisées associées à la donnée de souscription et
- si la recherche est positive, poursuite de la procédure de gestion de demande d'activation de la session de données paquet,
- si la recherche est négative, deuxième étape de vérification d'autorisation telle que celle décrite ci-dessus.

Selon une troisième variante du procédé de gestion de demande d'activation d'une session de données paquet pour un terminal, la vérification d'autorisation de la tranche demandée comprend une recherche de l'identifiant de la tranche demandée parmi une liste d'identifiants de tranches préalablement rejetées associées à la donnée de souscription et
- si la recherche est positive, résultat de vérification négatif,
- si la recherche est négative, deuxième recherche de l'identifiant de la tranche demandée parmi une liste d'identifiants de tranches préalablement autorisées associées à la donnée de souscription, et
   - si la deuxième recherche est positive, poursuite de la procédure de gestion de demande d'activation de la session de données paquet,
   - si la deuxième recherche est négative, résultat de vérification négatif.

Selon une quatrième variante du procédé de gestion de demande d'activation d'une session de données paquet pour un terminal, la vérification d'autorisation de la tranche demandée comprend une recherche de l'identifiant de la tranche demandée parmi une liste d'identifiants de tranches préalablement rejetées associées à la donnée de souscription et
- si la recherche est positive, résultat de vérification négatif,
- si la recherche est négative, deuxième recherche de l'identifiant de la tranche demandée parmi une liste d'identifiants de tranches préalablement autorisées associées à la donnée de souscription, et
   - si la deuxième recherche est positive, poursuite de la procédure de gestion de demande d'activation de la session de données paquet,
   - si la deuxième recherche est négative, deuxième étape de vérification d'autorisation telle que celle décrite ci-dessus.

Selon une cinquième variante du procédé de gestion de demande d'activation d'une session de données paquet pour un terminal, la vérification d'autorisation de la tranche demandée comprend une recherche de l'identifiant de la tranche demandée parmi une liste d'identifiants de tranches préalablement rejetées associées à la donnée de souscription et
- si la recherche est positive, résultat de vérification négatif,
- si la recherche est négative, deuxième étape de vérification d'autorisation telle que celle décrite ci-dessus.

Pour toutes ces variantes, peu importe que la procédure d'enregistrement soit réalisée selon le standard (où on stocke Allowed NSSAI et pas Rejected NSSAI) ou selon l'invention (où on envisage les différents cas de stockage Allowed NSSAI et/ou Rejected NSSAI).

De plus, pour toutes ces variantes, si le résultat d'autorisation de tranche est positif, l'authentification de tranche n'est pas à faire, même si cela est requis par la souscription, car elle a été faite lors de la procédure d'enregistrement.

L'invention concerne encore un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention concerne encore un dispositif de gestion de demande d'activation d'une session de données paquet pour un terminal utilisateur apte à émettre et recevoir des données sur un réseau de communications organisé en tranches de réseau, le terminal utilisateur comprenant un identifiant de souscription pour au moins une des tranches du réseau, le dispositif étant mis en œuvre par un au moins un équipement réseau, et comprenant un récepteur, un émetteur, un processeur et une mémoire couplée au processeur avec des instructions destinées à être exécutées par le processeur pour :
- recevoir une requête d'activation d'une session de données paquet en provenance du terminal utilisateur pour une tranche du réseau, la requête d'activation comprenant un identifiant de la tranche demandée, obtenu à partir d'un paramètre comprenant un ou plusieurs identifiants de tranche(s) souscrite(s) par l'utilisateur, la requête d'activation étant indépendante d'une autorisation ou d'un rejet de la tranche demandée (Sli) déterminé(e) lors de l'enregistrement du terminal utilisateur auprès du réseau;
- obtenir, à partir de l'identifiant de souscription, d'au moins une information permettant de déterminer une autorisation de la tranche demandée ;
- vérifier l'autorisation de la tranche demandée en tenant compte de l'au moins une information permettant de déterminer une autorisation de la tranche demandée obtenue et, si la vérification est négative, un rejet de la requête d'activation d'une session de données paquet pour la tranche demandée.

Ce dispositif, apte à mettre en œuvre dans tous ses modes de réalisation le procédé de gestion de demande d'activation d'une session de données paquet qui vient d'être décrit, est destiné à être mis en œuvre dans une entité réseau.

Ce dispositif et le programme d'ordinateur correspondants précités présentent au moins les mêmes avantages que ceux conférés par le procédé de gestion de demande d'activation d'une session de données paquet selon la présente technique.

Les entités réseau décrites dans la présente demande peuvent correspondre à des entités virtuelles, encore appelées fonctions.

Les identifiants de tranches S-NSSAI sont stockés par exemple sous forme de variables contenant un ou plusieurs champs, de même que les données spécifiques Configured NSSAI, Allowed NSSAI ou encore Rejected NSSAI.

La demande, dans une mise en oeuvre non revendiquée et non couverte par l'invention, concerne également un procédé d'enregistrement d'un terminal utilisateur auprès d'un réseau de communications organisé en tranches de réseau, ledit terminal utilisateur étant apte à émettre et recevoir des données sur le réseau, le procédé étant mis en œuvre par un équipement réseau de contrôle d'accès apte à communiquer avec le terminal utilisateur par l'intermédiaire du réseau et comprenant
- une réception d'une requête d'enregistrement émise par le terminal utilisateur pour s'enregistrer auprès d'au moins une des tranches du réseau, la requête d'enregistrement comprenant un identifiant *S*-*NSSAI* de l'au moins une tranche, obtenu à partir d'un paramètre *Configured NSSAI* associé au terminal utilisateur et comprenant un ou plusieurs identifiants de tranche(s) souscrite(s) par l'utilisateur sans vérification préalable par le terminal utilisateur que la tranche a été préalablement rejetée par le réseau ;
- une émission, à destination du terminal utilisateur, d'un message d'information en réponse à la requête d'enregistrement comprenant une information d'acceptation, sans information de tranches autorisées et/ou rejetées, ou une information de rejet de la requête d'enregistrement pour l'au moins une tranche ;
- une génération pour un paramètre de contexte du terminal utilisateur d'une information d'état binaire d'enregistrement associé au terminal utilisateur sans information relative aux tranches autorisées ni tranches rejetées.

Ainsi, la présente technique repose sur une approche tout à fait nouvelle et inventive de la procédure d'enregistrement d'un terminal utilisateur pour une ou plusieurs tranches d'un réseau de communication, s'affranchissant notamment des étapes classiques de vérification du statut autorisé ou rejeté des tranches demandées autant pour le terminal utilisateur que pour l'équipement réseau. De plus, cette procédure simplifiée s'affranchit également du stockage des informations relatives aux tranches autorisées ou rejetées, tant au niveau du terminal utilisateur qu'au niveau du réseau. Ainsi, à l'issue d'une demande d'enregistrement pour une ou plusieurs tranches du réseau émise par un terminal utilisateur, seul le contexte d'enregistrement général du terminal utilisateur (accepté ou rejeté) est stocké au niveau du réseau, sans stockage d'informations spécifiques relatives à un état autorisé ou rejeté de chacune des tranches demandées.

Pour ce faire, le terminal utilisateur ne se sert que des informations relatives à la souscription de tranches effectuées par l'utilisateur, ces informations étant disponibles sous la forme d'une donnée de configuration comprenant les identifiants des tranches souscrites. De même, l'équipement de réseau en charge de l'acceptation ou du rejet de la requête d'enregistrement du terminal utilisateur ne stocke pas d'informations spécifiques relatives au statut autorisé/rejeté des tranches demandées mais stocke uniquement une information de contexte général du terminal utilisateur relative à son état d'enregistrement accepté ou rejeté. Ainsi, aucune information de tranches autorisées/tranches rejetées n'est transmise au terminal utilisateur, contrairement aux spécifications actuelles.

La procédure d'enregistrement est donc fortement simplifiée car elle ne met pas en œuvre toutes les étapes prévues dans les spécifications actuelles et limite fortement la quantité d'informations stockées au cours ou à l'issue de la procédure d'enregistrement. Par ailleurs, la simplification de la procédure d'enregistrement permet également une simplification de la procédure ultérieure d'activation d'une session de données paquet par le terminal utilisateur.

Selon un aspect particulier, l'émission comprend une vérification préalable que l'au moins une tranche de réseau ou au moins une parmi les tranches demandées est autorisée, à partir de données relatives à une localisation courante du terminal utilisateur et un type d'accès demandé par le terminal utilisateur et où le message d'information comprend une information d'acceptation si le résultat de la vérification est positif ou une information de rejet si le résultat de la vérification est négatif.

Ainsi, selon cette variante, l'équipement du réseau en charge du traitement de la requête d'enregistrement effectue une vérification de manière à rejeter la requête d'enregistrement si toutes les tranches demandées sont rejetées, par exemple en raison d'une localisation ou d'un type d'accès interdits pour le terminal utilisateur. Cela permet d'informer le terminal utilisateur qu'il doit par exemple renouveler sa requête d'enregistrement lorsqu'il aura changé de localisation par exemple, avant d'entamer une procédure d'activation de session de données paquet qui lui serait refusée si aucune des tranches souscrites ne lui est autorisée à un instant donné.

Selon une caractéristique particulière, la génération comprend une génération d'une information relative soit aux tranches autorisées, soit aux tranches rejetées.

Selon une autre caractéristique l'information relative aux tranches autorisées et/ou tranches rejetées est stockée dans l'équipement réseau de gestion de données de souscription (ou ce dernier est apte à retrouver cette information comme mentionné précédemment ; par simplification pour la suite de la description, on suppose les données stockées dans l'équipement réseau de gestion de données de souscription, ce qui n'exclut pas le cas où le stockage serait délégué à une autre entité).

Le stockage de l'information relative aux tranches autorisées/rejetées dans l'équipement réseau de gestion de données de souscription, permet notamment de couvrir le cas où c'est le SMF qui va faire le contrôle d'autorisation et d'authentification.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] présente un exemple d'une architecture simplifiée d'un réseau de communications dans lequel est mis en œuvre le procédé de gestion de demande d'activation d'une session de données paquet selon un mode de réalisation de l'invention ;
[Fig 2] illustre sous forme de schéma bloc le procédé d'enregistrement selon un mode de réalisation de l'invention ;
[Fig 3a], [Fig 3b], [Fig 3c], [Fig 3d], [Fig 3e], [Fig 3f] et [Fig 3g] illustrent sous forme de schéma bloc le procédé de gestion de demande d'activation d'une session de données paquet selon plusieurs modes de réalisation de l'invention et plusieurs situations.

### Description détaillée de modes de réalisation de l'invention

La présente technique propose une meilleure gestion des informations de tranches, tant d'un point de vue stockage que d'un point de vue utilisation de ces informations de tranches, basée sur un compromis ente la quantité d'informations de tranches à stocker et l'utilité de ces informations par le terminal utilisateur et le réseau, tout en optimisant les procédures d'enregistrement d'un terminal utilisateur et d'activation de session de données paquet pour une ou plusieurs tranches du réseau pour un terminal utilisateur.

Ainsi, la connaissance au niveau du terminal utilisateur des identifiants des tranches rejetées (dans la variable Rejected NSSAI) présente un intérêt pour la procédure d'enregistrement du terminal utilisateur : en effet, cela permet au terminal utilisateur de ne pas redemander d'enregistrement pour une tranche qui a été rejetée lors d'un enregistrement précédent. En revanche, connaitre les identifiants des tranches autorisées (dans la variable Allowed NSSAI) n'apporte rien à la procédure d'enregistrement.

La connaissance au niveau du terminal utilisateur des identifiants des tranches autorisées et/ou rejetées présente un intérêt pour la procédure d'activation de PDU session : en effet, connaitre les identifiants des tranches autorisées (dans la variable Allowed NSSAI) permet au terminal utilisateur d'activer une session de données paquet si la tranche est autorisée, et connaitre les identifiants des tranches rejetées (dans la variable Rejected NSSAI) permet au terminal utilisateur de ne pas demander de session de données paquet si la tranche est rejetée.

Cependant, il est possible que certaines tranches souscrites par l'utilisateur et configurées comme telles ne se trouvent ni parmi les tranches autorisées ni parmi les tranches rejetées, car la procédure d'enregistrement telle que définie actuellement par le standard ne détermine les tranches autorisées et les tranches rejetées que parmi les tranches demandées par le terminal utilisateur au moment de son enregistrement. La connaissance, au niveau du terminal utilisateur, des informations d'autorisation et/ou rejet des tranches souscrites n'est donc pas précise ni exhaustive.

Par ailleurs, la connaissance au niveau du réseau, et notamment au niveau de l'entité AMF, via l'information UE Context, des informations suivantes, présente un intérêt pour la procédure d'activation de session de données paquet :
- connaitre les identifiants des tranches autorisées (dans la variable Allowed NSSAI) permet au réseau d'accepter une demande de session de données paquet d'un terminal utilisateur si la tranche a été préalablement autorisée lors de l'enregistrement ;
- connaitre les identifiants des tranches rejetées (dans la variable Rejected NSSAI) permet au réseau de rejeter une demande de session de données paquet si la tranche a été préalablement rejetée lors de l'enregistrement.

Cependant, là encore, il est possible que le réseau n'ait pas connaissance de l'autorisation ou du rejet pour certaines tranches et de fait le réseau ne connait que les tranches autorisées parmi celles qui ont été demandées par le terminal utilisateur lors de la procédure d'enregistrement.

Le principal général de la technique proposée repose donc, selon un mode de réalisation, sur le fait de ne stocker aucune information de tranches, tant au niveau du terminal utilisateur qu'au niveau du réseau, lors de la procédure d'enregistrement du terminal utilisateur. Seule une information représentative de l'état enregistré ou non du terminal est stockée au niveau du réseau.

Ainsi, cette procédure simplifiée d'enregistrement du terminal utilisateur permet non seulement de stocker moins d'informations, tant au niveau du réseau que du terminal utilisateur lui-même, et notamment de ne pas stocker d'informations concernant l'autorisation ou le rejet des tranches préalablement souscrites par l'utilisateur, mais également de ne pas communiquer ces informations du réseau vers le terminal utilisateur à la fin de la procédure d'enregistrement de ce dernier, et de s'affranchir, côté terminal utilisateur, du contrôle de l'autorisation ou du rejet de la tranche pour laquelle il demande l'activation d'une session de données paquet. Le terminal utilisateur peut demander l'activation d'une session de données paquet pour n'importe laquelle des tranches auxquelles l'utilisateur a souscrit, sans contrôler préalablement si ces tranches sont autorisées ou rejetées par le réseau.

De ce fait, la technique proposée repose donc également, selon différentes variantes de réalisation, sur le contrôle effectué par le réseau lors de la procédure d'activation d'une session de données paquet demandée par le terminal utilisateur pour savoir si la tranche demandée par le terminal est autorisée ou non, et, le cas échéant lorsque cela est requis, si elle est authentifiée ou non.

Enfin, selon une variante de réalisation de la technique proposée, le réseau ne gère (ni ne communique vers le terminal utilisateur) aucune information de tranches relatives à l'autorisation ou au rejet, facilitant ainsi son fonctionnement et celui du terminal utilisateur.

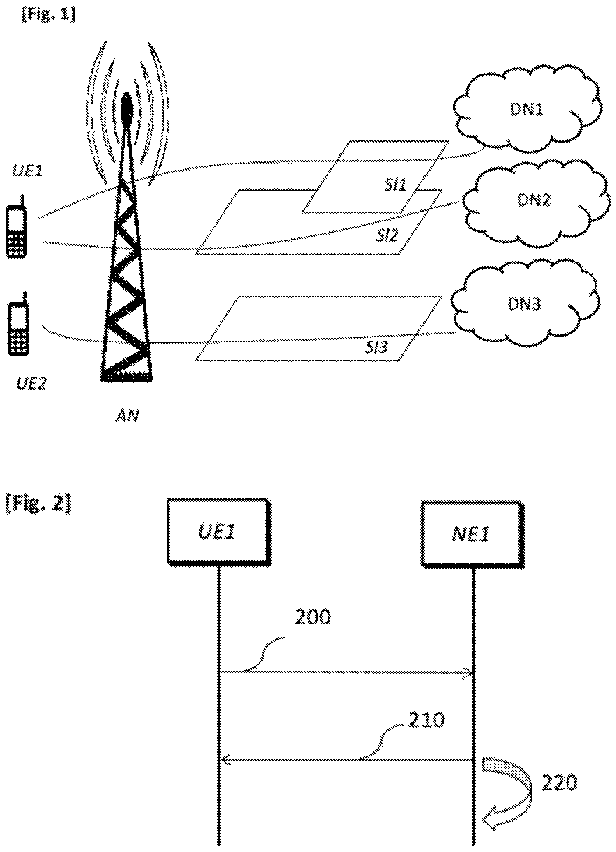

On décrit maintenant la technique proposée, en relation avec les figures 1 à 3a.

Un exemple d'architecture réseau, dans lequel la technique proposée peut être mise en œuvre, est tout d'abord illustré, de manière simplifiée, en figure 1. Un ou plusieurs terminaux utilisateurs, notés *UE1, UE2,* accèdent, via un réseau d'accès *AN,* à un ou plusieurs réseaux de données DN1, DN2 ou DN3, via une ou plusieurs tranches *Sl1, Sl2* et *Sl3.*

On s'intéresse ensuite à un terminal utilisateur *UE1* qui souhaite recevoir des données sur une ou plusieurs tranches d'un réseau tel qu'illustré en figure 1.

Pour ce faire, un utilisateur *U1,* par exemple l'utilisateur principal du terminal utilisateur *UE1,* souscrit, auprès de son opérateur de télécommunications, à une ou plusieurs des tranches du réseau, par exemple selon ses habitudes ou ses souhaits de consommation de contenus, les performances de son terminal utilisateur *UE1...* Suite à sa souscription, des données de souscription *DSub,* comprenant notamment les identifiants des tranches auxquelles l'utilisateur *U1* a souscrit, sont créées. De plus, un identifiant de souscription *IdSub,* par exemple la variable SUPI (ou en anglais Subscription Permanent Identifier) permet d'accéder à ces données de souscription *DSub,* par exemple lorsqu'elles sont stockées dans un équipement réseau de gestion de données de souscription. Cet identifiant de souscription est notamment stocké dans la carte SIM du terminal utilisateur *UE1* et est représentatif de la souscription, souscription contenant une ou des tranches souscrites, sans être exclusivement associé ni à l'utilisateur *U1* ni au terminal utilisateur *UE1.* En effet, un autre utilisateur *U2* peut avoir obtenu l'autorisation de l'utilisateur *U1* de se servir de sa souscription, ou la carte SIM stockant l'identifiant de souscription peut être transférée du terminal utilisateur *UE1* vers un autre terminal utilisateur *UE2* par exemple.

Selon la technique proposée, et comme illustré en figure 2, le terminal utilisateur demande donc ensuite à s'enregistrer auprès du réseau (par exemple via une entité réseau référencée *NE1*) pour une ou plusieurs tranches souscrites par l'utilisateur. Cette information des tranches souscrites est notamment disponible, car stockée par le terminal utilisateur, dans une donnée/un paramètre référençant les tranches souscrites et notée par exemple Configured NSSAI.

Comme déjà indiqué précédemment, selon ce mode de réalisation, le terminal utilisateur n'examine pas l'état, autorisé ou rejeté, de la tranche ou des tranches auprès de laquelle/desquelles il demande à s'enregistrer, car il n'a pas stocké cette information d'autorisation ou de rejet lors d'un précédent enregistrement. En effet, ce mode de réalisation se base sur une procédure simplifiée d'enregistrement ne stockant pas d'informations relatives aux tranches autorisées et/ou rejetées, dans le terminal utilisateur, contrairement au standard actuel. De plus, comme déjà indiqué et décrit plus en détails ci-dessous, le terminal utilisateur peut demander l'activation d'une session de données paquet pour n'importe quelle tranche souscrite (dont l'identifiant est stocké dans la variable Configured NSSAI).

Ainsi, cette procédure d'enregistrement ne met donc pas en œuvre, notamment, l'étape prévue par les spécifications actuelles au cours de laquelle le terminal utilisateur examine la valeur de la variable Rejected NSSAI afin de ne pas redemander l'enregistrement d'une tranche déjà rejetée lors de l'enregistrement précédent (pour un même type d'accès et une même zone d'enregistrement).

Au niveau du réseau, l'équipement *NE1* ou par exemple l'entité ou la fonction réseau de contrôle d'accès, AMF, reçoit, lors d'une étape de réception 200, la requête d'enregistrement émise par le terminal utilisateur, avec un ou plusieurs identifiants de tranches souscrites, et la procédure d'enregistrement se poursuit selon plusieurs variantes.

Selon une première variante de ce procédé d'enregistrement, l'entité réseau *NE1* ne vérifie pas si les tranches référencées par les identifiants dans la requête sont autorisées ou rejetées, pour la localisation courante du terminal utilisateur et le type d'accès demandé, et accepte la requête d'enregistrement. L'entité réseau *NE1* en informe le terminal utilisateur par l'émission 210 d'un message d'acceptation, sans information sur les tranches autorisées ou rejetées.

Selon une deuxième variante de ce procédé d'enregistrement, l'entité réseau *NE1* vérifie si toutes les tranches demandées dans la requête d'enregistrement ne sont pas rejetées, pour la localisation courante du terminal utilisateur et le type d'accès demandé. Si tel est le cas, l'entité réseau *NE1* rejette la demande d'enregistrement et en informe le terminal utilisateur par l'émission 210 d'un message de rejet. Le terminal utilisateur pourra reformuler ultérieurement sa demande d'enregistrement, par exemple lorsqu'il aura changé de localisation. En revanche, si au moins une des tranches est autorisée, l'AMF accepte la requête d'enregistrement et en informe le terminal utilisateur par l'émission 210 d'un message d'acceptation, sans information sur les tranches autorisées ou rejetées. Selon cette deuxième variante, la vérification des tranches autorisées/rejetées est mise en œuvre par l'entité réseau *NE1* en tenant compte des données de souscription, à partir de l'identifiant de souscription.

Selon ces deux variantes de ce procédé d'enregistrement, l'état binaire d'enregistrement du terminal utilisateur (par exemple le paramètre RM State) est mis à jour, lors d'une étape de génération 220, par l'entité réseau *NE1* et stocké dans un paramètre de contexte du terminal utilisateur *UE1* (par exemple la donnée/variable UE Context). Par défaut, l'état d'enregistrement correspond à l'état non enregistré, et si la requête d'enregistrement est acceptée, le paramètre est mis à jour avec l'état enregistré.

Cet état d'enregistrement permet donc, au réseau, de savoir si le terminal utilisateur est bien enregistré auprès du réseau. Cet état d'enregistrement n'est cependant pas communiqué au terminal utilisateur dans la réponse à sa requête d'enregistrement car le terminal est apte à mettre à jour son état d'enregistrement selon le standard (notamment passer à l'état enregistré lorsqu'il reçoit une réponse d'acceptation d'enregistrement).

Ainsi, à l'issue de la procédure d'enregistrement du terminal utilisateur, l'entité réseau *NE1* émet un message d'information comprenant une information d'acceptation ou de rejet (selon la deuxième variante) de l'enregistrement ne comprenant aucune information relative aux tranches souscrites ou à l'état d'enregistrement du terminal utilisateur.

Cette procédure se distingue donc fortement du fonctionnement du standard actuel, selon lequel les tranches demandées dans la requête sont toutes vérifiées, les tranches autorisées sont listées dans un paramètre (Allowed NSSAI) stocké à la fois côté réseau et côté terminal utilisateur, et les tranches rejetées sont listées dans un paramètre (Rejected NSSAI) stocké côté terminal utilisateur.

Selon une troisième variante de ce procédé d'enregistrement, une vérification d'autorisation des tranches est effectuée pour tous les identifiants de tranches de la requête d'enregistrement, et les résultats de cette vérification sont stockés respectivement dans une variable listant les identifiants des tranches autorisées (par exemple le paramètre Allowed NSSAI) et dans une variable listant les identifiants des tranches rejetées (par exemple le paramètre Rejected NSSAI). De plus, ces deux variables sont transmises au terminal utilisateur dans la réponse d'acceptation ou de rejet du réseau. Ainsi, selon cette troisième variante, le réseau a connaissance des tranches autorisées et rejetées, par exemple en stockant dans le paramètre de contexte du terminal utilisateur *UE1* (par exemple la donnée/variable UE Context) les variables Allowed NSSAI et Rejected NSSAI ou en contactant un équipement réseau de gestion de données de souscription apte à stocker l'une et/ou l'autre de ces données. Ces informations seront notamment utiles pour la mise en œuvre de la procédure de gestion d'une demande d'activation d'une session de données paquet du terminal utilisateur vers le réseau, décrite ci-après.

Selon la technique proposée, et grâce à la procédure simplifiée d'enregistrement, le terminal utilisateur peut demander l'activation d'une session de données paquet pour n'importe laquelle des tranches souscrites, i.e. pour n'importe laquelle des tranches référencées par exemple dans la variable Configured NSSAI, indépendamment du « statut » autorisé/rejeté qui pourrait être associé à cette tranche, contrairement aux spécifications actuelles. La technique proposée permet notamment au terminal utilisateur de pouvoir demander l'activation d'une tranche souscrite non encore demandée par le terminal utilisateur mais potentiellement autorisée, alors que, selon l'art antérieur, le terminal utilisateur ne peut le faire que pour une tranche déjà autorisée donc déjà demandée, et surtout ne peut pas le faire pour une tranche rejetée lors d'un enregistrement précédent.

Selon la technique proposée, le terminal utilisateur *UE1* demande l'activation d'une session de données paquet pour une seule tranche et c'est donc le réseau, et notamment l'entité *NE1* correspondant par exemple à l'entité ou la fonction AMF, qui procède à une vérification de l'autorisation de la tranche demandée (et à son authentification si celle-ci est requise). Cette vérification peut tenir compte du type d'accès et de la localisation en cours du terminal utilisateur, car la souscription à certaines tranches peut être restreinte à une zone donnée ou un type d'accès donné (3GPP, non-3GPP). L'entité *NE1,* par exemple une entité réseau de contrôle d'accès, peut également transmettre la requête reçue en provenance du terminal utilisateur à une autre entité réseau *NE2,* par exemple une entité réseau de contrôle de session comme l'entité ou la fonction SMF, qui effectue ensuite à la place de NE1 l'une et/ou l'autre des étapes de vérification de l'autorisation de la tranche et d'authentification de la tranche, si requise, comme expliquée ci-dessous (ce qui nécessite une étape préalable de sélection de SMF connue du standard).

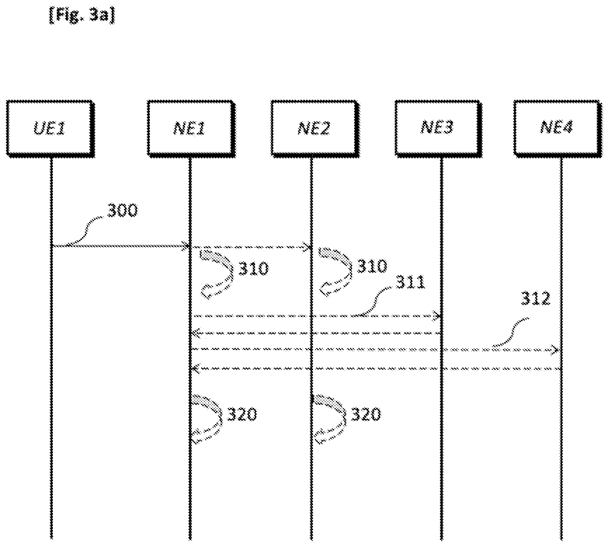

Ainsi, la figure 3a illustre d'abord une première étape de réception 300, par une entité réseau *NE1,* d'une requête d'activation d'une session de données paquet en provenance du terminal utilisateur *UE1* pour une tranche *i* du réseau identifiée par un identifiant *Sli.* L'entité réseau *NE1* obtient, lors d'une étape d'obtention 310, à partir de l'identifiant de souscription *IdSub,* au moins une information permettant de déterminer une autorisation de la tranche demandée (*Sli*).

Cette information peut correspondre à des données de souscription (et notamment les identifiants des tranches souscrites) stockées dans un équipement réseau de gestion de données de souscription accessible grâce à l'identifiant de souscription. Dans ce cas, les données de souscription sont donc obtenues via une interrogation 311 de l'équipement réseau de gestion de données de souscription *NE3,* par exemple appelée UDM selon le standard en vigueur (en anglais Unified Data Management). Ensuite, à partir de ces données de souscription, l'entité réseau *NE1* (ou *NE2)* peut effectuer l'étape de vérification 320 de l'autorisation de la tranche demandée par le terminal utilisateur *UE1.*

Pour ce faire, selon une première mise en œuvre, l'entité réseau *NE1* (ou *NE2)* réalise directement cette vérification, à partir des données de souscription récupérées, lors d'une étape 320.

Selon une deuxième mise en œuvre, l'entité réseau *NE1* (ou *NE2)* n'a pas accès directement à une information d'autorisation de la tranche demandée et effectue une interrogation 312 d'une autre entité réseau de sélection d'instance de tranche *NE4,* par exemple l'entité NSSF en lui fournissant notamment un paramètre avec les identifiants des tranches souscrites (par exemple Subscribed NSSAI) et l'identifiant *Sli* (par exemple Requested NSSAI) correspondant à la tranche demandée. L'information permettant de déterminer une autorisation de la tranche demandée (*Sli*) peut également, selon une troisième mise en œuvre, correspondre à des données stockées par l'entité réseau *NE1* dans un paramètre de contexte du terminal utilisateur (par exemple *UE* Context) comprenant notamment l'état d'enregistrement (*RM State*) du terminal utilisateur mais également les identifiants des tranches autorisées (Allowed NSSAI) et/ou rejetées (Rejected NSSAI) ou, selon une quatrième mise en œuvre, ces mêmes données stockées dans les données de souscription (lors de l'enregistrement) obtenues par l'entité réseau via une interrogation 311 de l'équipement réseau de gestion de données de souscription. Ainsi, à partir de ces identifiants des tranches autorisées et/ou rejetées, l'entité réseau *NE1* (ou *NE2)* peut effectuer l'étape de vérification 320 de l'autorisation de la tranche demandée par le terminal utilisateur *UE1.*

Selon certaines mises en œuvre (première et deuxième), comme indiqué précédemment, aucune information de tranches autorisées et de tranches rejetées n'est stockée au moment de l'enregistrement contrairement à d'autres mises en œuvre où des informations de tranches autorisées et/ou tranches rejetées peuvent être stockées dans un contexte du terminal utililsateur (troisième mise en œuvre) ou dans un équipement réseau de gestion de données de souscription (quatrième mise en œuvre).

Il est donc important de noter que la vérification de l'autorisation ne concerne que la tranche demandée par le terminal utilisateur et cette vérification est mise en œuvre uniquement lors de la procédure d'activation d'une session de données paquet (et non plus lors de la procédure d'enregistrement du terminal utilisateur comme dans le standard actuel) pour les deux premières mises en œuvre, ou pour les deux dernières mises en œuvre, quand la tranche demandée lors de l'activation d'une session de données paquet ne se trouve pas dans la liste des tranches autorisées préalablement stockées lors de l'enregistrement dans un contexte utilisateur ou un équipement réseau de gestion de données de souscription.

La vérification d'autorisation de la tranche demandée peut également tenir compte d'une information de localisation du terminal utilisateur et/ou d'une information relative au type d'accès utilisé par le terminal utilisateur, car certaines tranches peuvent être souscrites avec des restrictions, notamment de zones ou de type d'accès.

Si la vérification délivre un résultat négatif, i.e. la tranche demandée n'est pas autorisée pour le terminal utilisateur (en raison peut-être de sa localisation ou du type d'accès utilisé), le réseau rejette la demande d'activation de PDU session (une cause d'erreur spécifique peut être créée par exemple *rejected slice* ou *unauthorized slice* et éventuellement un paramètre supplémentaire indiquant la tranche concernée) et la procédure d'activation de session de données paquet est terminée pour la tranche demandée.

En revanche, si la vérification délivre un résultat positif, alors la procédure d'activation d'une session de données paquet se poursuit, selon différentes variantes de réalisation décrites ci-après.

Ainsi, le réseau procède ensuite, selon un premier mode de réalisation, à l'authentification de la tranche demandée, si cela est requis par la souscription (sauf si la tranche est présente dans la liste des tranches autorisées stockée dans un contexte utilisateur ou un équipement réseau de gestion de données de souscription ; l'authentification a été réalisée pendant l'enregistrement pour ces cas). En effet, les données de souscription contiennent une information indiquant si une tranche doit faire l'objet d'une authentification ou non avant d'être considérée comme autorisée. L'authentification de la tranche autorisée est effectuée, par exemple selon une procédure similaire à celle mise en œuvre lors de la procédure d'enregistrement décrite dans le standard, à ceci près qu'elle est mise en œuvre uniquement pendant la procédure d'activation d'une session de données paquet. Ainsi, l'enchainement des étapes par rapport à la procédure d'enregistrement décrite dans le standard est différent car l'authentification de la tranche est la dernière étape de la procédure d'enregistrement décrite dans le standard (3GPP TS 23.502 v16.7.0 § 4.2.2.2.2 étape 25) et n'est suivie par aucune autre étape.

Si l'authentification de la tranche autorisée est positive, alors la procédure d'activation d'une session de données paquet se poursuit, selon différentes variantes de réalisation décrites ci-après, et par exemple :
- avec l'étape de sélection d'entité réseau de contrôle de session par l'entité réseau de contrôle d'accès (par exemple après avoir exécuté une autorisation de tranche et/ou une authentification de tranche ou aucune de ces étapes), ceci afin de lui transmettre la requête émanant du terminal utilisateur ; ou
- avec l'étape d'interrogation de l'équipement réseau de gestion de données de souscription par l'entité réseau de contrôle de session pour obtenir les données de souscription relative au contrôle de session si elle ne les a pas déjà; ou
- avec l'étape de réponse de l'entité réseau de contrôle de session (par exemple après avoir exécuté une autorisation de tranche et/ou une authentification de tranche ou aucune de ces étapes) vers l'entité réseau de contrôle d'accès.

Ces étapes sont connues du standard (3GPP v16.7.0 TS 23.502 § 4.3.2.2.1 étapes 2, 4, 5 respectivement). En revanche, si l'entité de contrôle de session interroge l'équipement réseau de gestion de données de souscription pour obtenir les informations de tranches autorisées/tranches rejetées selon l'invention, alors cette interrogation est couplée en une seule interrogation avec l'interrogation pour obtenir les données de contrôle de session (si ces données ne sont pas déjà présentes).

En revanche, si l'authentification de la tranche autorisée est rejetée, alors le réseau rejette la demande d'activation de PDU session et la procédure d'activation de session de données paquet est terminée pour la tranche demandée.

Selon un deuxième mode de réalisation, l'authentification de la tranche peut être réalisée avant la vérification d'autorisation de la tranche demandée, toujours si les données de souscription le requièrent. Dans ce cas, si la tranche demandée n'est pas authentifiée, le réseau rejette la demande d'activation de PDU session et la procédure d'activation de session de données paquet est terminée pour la tranche demandée. En revanche, si la tranche demandée est authentifiée, la vérification de l'autorisation est mise en œuvre, comme décrite ci-dessus, et la procédure d'activation de session de données paquet se poursuit si la tranche est autorisée, ou le réseau rejette la demande d'activation de PDU session si la tranche demandée authentifiée n'est pas autorisée et la procédure d'activation de session de données paquet est terminée pour la tranche demandée.

Les deux premières mises en œuvre précitées de la procédure d'activation d'une session de données paquet correspondent à une solution simplifiée, dans laquelle aucune information d'autorisation ou de rejet de tranche n'est stockée lors de l'enregistrement du terminal utilisateur auprès du réseau, ni lors de l'activation d'une session de données paquet, tant au niveau du terminal utilisateur que du réseau. Cette solution présente donc notamment les effets techniques suivants :
- solution plus scalable, car elle est applicable de la même façon quel que soit le nombre de tranches auxquelles l'utilisateur a souscrit (y compris si le nombre maximal augmentait par rapport à ce que permet actuellement le standard);
- solution économique en termes de stockage : il n'est pas nécessaire de stocker d'information de tranches autorisées/tranches rejetées ni au niveau du terminal utilisateur, ni au niveau du réseau, cela permet des économies d'énergie au niveau du terminal utilisateur et au niveau du réseau ;
- solution plus simple : le fait de ne pas avoir de stockage d'information de tranches autorisées/tranches rejetées limite le traitement au niveau du terminal utilisateur et du réseau (par exemple sur le choix des tranches lors de la demande d'enregistrement et la demande d'activation de session de données paquet);
- solution plus simple pour la gestion de la localisation : il n'est pas nécessaire que le réseau informe le terminal utilisateur chaque fois qu'une tranche change d'état (autorisée/rejetée) selon sa localisation courante puisque l'état tranche autorisée/rejetée n'est pas géré ni stocké ;
- solution plus simple pour la sélection d'instance de tranche : la sélection d'instance de tranche (NSI, en anglais Network Slice Instance) n'est pas faite lors de l'enregistrement du terminal utilisateur mais lors de l'activation de session de données paquet et cela peut être fait en même temps que la vérification de l'autorisation de la tranche demandée (une seule interrogation vers l'entité réseau NSSF pour la vérification d'autorisation et la sélection d'instance de tranche) ;
- solution plus économique en termes de temps de traitement : l'entité réseau de contrôle d'accès (AMF par exemple) est potentiellement apte à gérer plus de terminaux utilisateurs puisqu'elle ne gère plus, pour ces terminaux, d'information de tranches autorisées/tranches rejetées et ne met donc plus en œuvre les traitements qui y sont liés.

Pour les deux dernières mises en œuvre précitées, certaines informations de tranches rejetées sont stockées en complément ou remplacement d'informations de tranches autorisées au moment de l'enregistrement (alors que, selon le standard actuel, seules des informations de tranches autorisées sont stockées) notamment au niveau du réseau, dans le paramètre de contexte du terminal utilisateur ou dans l'équipement réseau de gestion de données de souscription et sont utilisées lors de la procédure d'activation de session de données paquet. Ceci est décrit précédemment en relation avec la troisième variante du procédé d'enregistrement.

Pour rappel, selon cette troisième variante de ce procédé d'enregistrement, les résultats de la vérification des tranches requises pour l'enregistrement du terminal utilisateur sont stockés respectivement dans une variable listant les identifiants des tranches autorisées (par exemple le paramètre Allowed NSSAI) et dans une variable listant les identifiants des tranches rejetées (par exemple le paramètre Rejected NSSAI). Ainsi, selon cette troisième variante du procédé d'enregistrement, le réseau a connaissance des tranches autorisées et rejetées, par exemple en stockant dans le paramètre de contexte du terminal utilisateur *UE1* (par exemple la donnée/variable UE Context) les variables Allowed NSSAI et Rejected NSSAI ou en les stockant dans l'équipement réseau de gestion de données de souscription. Ces informations sont donc utilisées pour la mise en œuvre de la procédure de gestion d'une demande d'activation d'une session de données paquet du terminal utilisateur vers le réseau, selon les différentes variantes de réalisation décrits ci-après.

Selon une première variante de la procédure de gestion d'une demande d'activation de session de données paquet, la vérification de la tranche demandée comprend d'abord une recherche de l'identifiant *Sli* de cette tranche demandée dans la liste des tranches autorisées. Si cette recherche est positive, i.e. si la tranche demandée est autorisée, alors la procédure d'activation de session de données paquet se poursuit, par exemple par la mise en œuvre de l'étape de sélection d'entité réseau de contrôle de session décrite ci-dessus. Il est à noter que si la tranche est présente dans la liste des tranches autorisées, c'est qu'elle a également été authentifiée, donc l'étape d'authentification décrite ci-dessus n'est pas à nouveau mise en œuvre. En revanche, selon cette première variante, si la recherche est négative, i.e. si la tranche demandée n'a pas été préalablement autorisée, alors la requête d'activation de la session de données paquet est rejetée pour la tranche demandée. Il est aussi à noter que cette première variante de procédure de gestion d'une demande d'activation de session de données paquet peut ête mise en œuvre à la suite d'une demande d'enregistrement selon le standard actuel, qui stocke en effet la liste des tranches autorisées.

Une deuxième variante de la procédure de gestion d'une demande d'activation de session de données paquet diffère de la première variante ci-dessus uniquement par le fait que, lorsque la recherche est négative, alors une deuxième vérification d'autorisation de la tranche demandée est mise en œuvre, selon la première ou deuxième mise en œuvre décrite ci-dessus avec les étapes 300, 310 et 320, c'est-à-dire en obtenant, à partir de l'identifiant de souscription, une information permettant de déterminer cette autorisation. Cette deuxième variante part du principe que la tranche demandée n'a peut-être tout simplement pas fait partie de la requête d'enregistrement, auquel cas elle n'a pas pu être autorisée pendant la procédure d'enregistrement, ce qui n'implique pas forcément qu'elle soit rejetée.

Selon une troisième variante de la procédure de gestion d'une demande d'activation de session de données paquet, la vérification de la tranche demandée comprend d'abord une recherche de l'identifiant *Sli* de cette tranche demandée dans la liste des tranches rejetées. Si cette recherche est positive, i.e. si la tranche demandée est rejetée, alors la requête d'activation de la session de données paquet est rejetée pour la tranche demandée. En revanche, si la recherche est négative, i.e. si la tranche demandée n'a pas été préalablement rejetée, alors une deuxième recherche de l'identifiant *Sli* de la tranche demandée dans la liste des tranches autorisées est mise en œuvre. Si cette deuxième recherche est positive, i.e. si la tranche demandée est autorisée, alors la procédure d'activation de session de données paquet se poursuit, par exemple par la mise en œuvre de l'étape de sélection d'entité de contrôle de session décrite précédemment. Si la deuxième recherche est négative, alors la requête d'activation de la session de données paquet est rejetée pour la tranche demandée.

Selon une quatrième variante, si cette deuxième recherche est négative, i.e. la tranche demandée n'est ni dans la liste des tranches autorisées ni dans la listes de tranches rejetées, une deuxième vérification d'autorisation de la tranche demandée est mise en œuvre, selon la première ou deuxième mise en œuvre décrite ci-dessus avec les étapes 300, 310 et 320, c'est-à-dire en obtenant, à partir de l'identifiant de souscription, une information permettant de déterminer cette autorisation.
alors une deuxième vérification d'autorisation de la tranche demandée est mise en œuvre, selon la première ou deuxième mise en œuvre décrite ci-dessus avec les étapes 300, 310 et 320, c'est-à-dire en obtenant, à partir de l'identifiant de souscription, une information permettant de déterminer cette autorisation.

Enfin, selon une cinquième variante de la procédure de gestion d'une demande d'activation de session de données paquet, la vérification de la tranche demandée comprend d'abord, comme la troisième variante, une recherche de l'identifiant *Sli* de cette tranche demandée dans la liste des tranches rejetées. Si cette recherche est positive, i.e. si la tranche demandée est rejetée, alors la requête d'activation de la session de données paquet est rejetée pour la tranche demandée. En revanche, selon cette cinquième variante, si la recherche est négative, i.e. si la tranche demandée n'a pas été préalablement rejetée, alors la procédure d'activation de session de données paquet se poursuit, par exemple par la mise en œuvre de l'étape de sélection d'entité de contrôle de session décrite précédemment.

Ainsi, ces différentes variantes permettent de tirer profit du stockage de certaines informations de tranches (autorisées et/ou rejetées) pour assurer un meilleur contrôle de l'usage des tranches, simplifier la procédure de gestion d'une demande d'activation de session de données paquet et notamment mutualiser la vérification d'autorisation qu'elle prévoit au niveau de l'entité de contrôle de session.

Enfin, comme évoqué ci-dessus, la procédure de gestion d'une demande d'activation de session de données paquet peut ête mise en œuvre selon deux modes de réalisation, le premier prévoyant une vérification de l'autorisation d'une tranche puis une authentification (si requise) de la tranche autorisée et le deuxième prévoyant cette authentification (si requise) avant la vérification de l'autorisation, ces deux modes de réalisation pouvant être, de plus, implémentés par une ou plusieurs entités réseau (notamment une entité de gestion d'accès comme AMF et une entité de contrôle de session comme SMF), selon les situations.

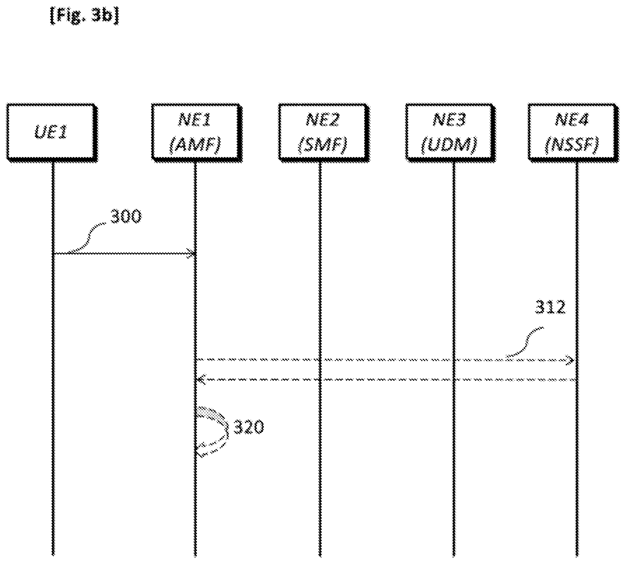

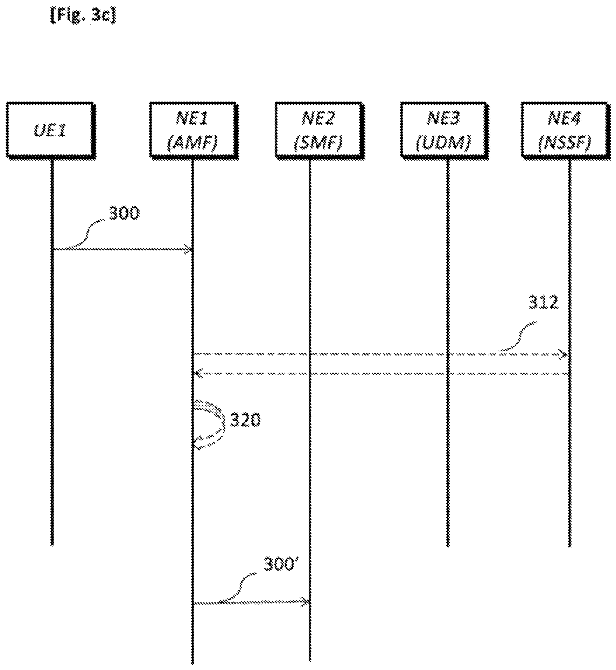

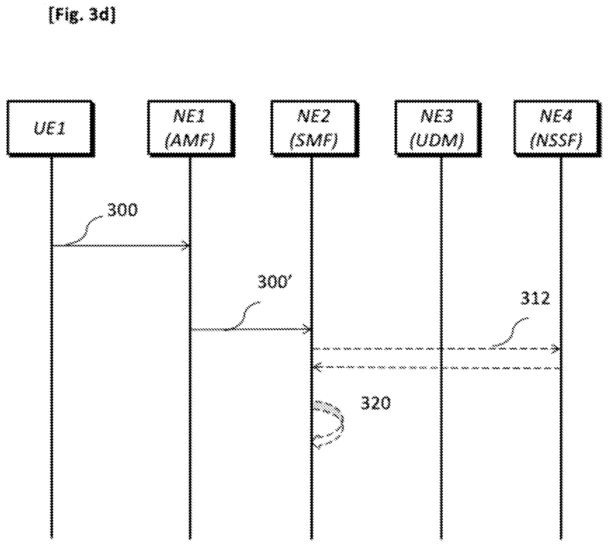

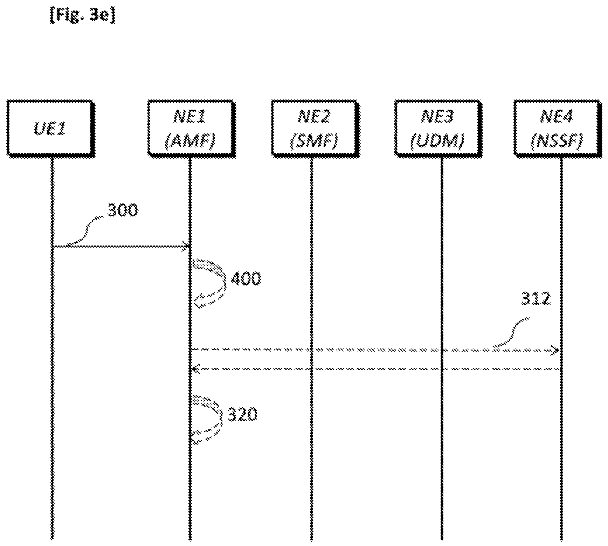

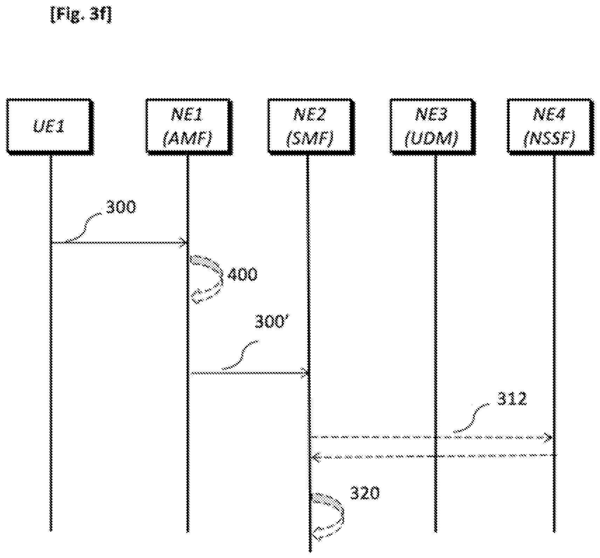

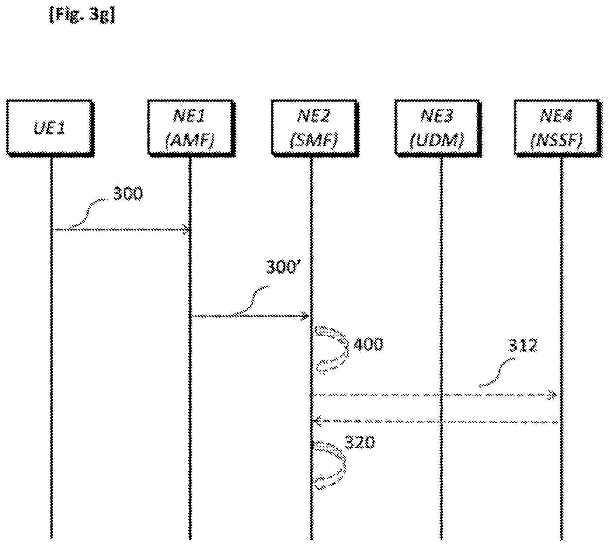

Ces différentes situations sont notamment décrites ci-après, en relation avec les figures [Fig 3b], [Fig 3c], [Fig 3d] pour le premier mode de réalisation et [Fig 3e], [Fig 3f] et [Fig 3g] pour le deuxième mode de réalisation.

Dans le cadre du premier mode de réalisation, la Fig. 3b illustre la situation où la vérification de l'autorisation d'une tranche, mise en œuvre avant l'authentification de tranche, est effectuée par une entité réseau *NE1,* par exemple une entité de contrôle d'accès AMF. Ainsi, cette entité AMF reçoit lors d'une étape 300 une requête d'activation d'une session de données paquet en provenance du terminal utilisateur *(UE1)* pour une tranche du réseau et met notamment en œuvre une interrogation 312 d'une autre entité réseau de sélection d'instance de tranche *NE4,* par exemple l'entité NSSF, afin d'obtenir une information permettant de déterminer l'autorisation de la tranche demandée. A réception de la réponse de l'entité NSSF, l'AMF met en œuvre une étape 320 de vérification de l'autorisation de la tranche demandée. Ensuite, la procédure se poursuit, notamment avec une authentification de la tranche autorisée si elle est requise.

La Fig. 3c illustre la situation où la vérification de l'autorisation d'une tranche est effectuée par une entité réseau *NE1,* par exemple une entité de contrôle d'accès AMF, avant l'authentification de tranche effectuée par une autre entité réseau *NE2,* par exemple une entité réseau de de contrôle de session SMF. Pour ce faire, la requête d'activation d'une session de données paquet reçue par l'AMF, en provenance du terminal utilisateur *(UE1)* pour une tranche du réseau, est transmise, lors d'une étape 300', au SMF (préalablement sélectionné) en vue de l'authentification de la tranche, prélablement autorisée par l'AMF (via les étapes 312 et 320 précédemment décrites).

La Fig. 3d illustre la situation où la vérification de l'autorisation d'une tranche et ensuite l'authentification de tranche sont effectuées par une entité réseau *NE2,* par exemple une entité réseau de de contrôle de session SMF. Pour ce faire cependant, l'entité réseau *NE1,* par exemple une entité de contrôle d'accès AMF reçoit lors d'une étape 300 une requête d'activation d'une session de données paquet en provenance du terminal utilisateur *(UE1)* pour une tranche du réseau et la transmet, lors d'une étape 300', au SMF (préalablement sélectionné). C'est ensuite l'entité SMF qui met en œuvre une interrogation 312 d'une autre entité réseau de sélection d'instance de tranche *NE4,* par exemple l'entité NSSF, afin d'obtenir une information permettant de déterminer l'autorisation de la tranche demandée. A réception de la réponse de l'entité NSSF, l'entité SMF met en œuvre une étape 320 de vérification de l'autorisation de la tranche demandée. Ensuite, la procédure se poursuit, notamment avec une authentification de la tranche autorisée si elle est requise.

Dans le cadre du deuxième mode de réalisation, la Fig. 3e illustre la situation où la vérification de l'autorisation d'une tranche est effectuée après l'authentification de tranche, par une entité réseau *NE1,* par exemple une entité de contrôle d'accès AMF. Ainsi, cette entité AMF reçoit lors d'une étape 300 une requête d'activation d'une session de données paquet en provenance du terminal utilisateur *(UE1)* pour une tranche du réseau et met en œuvre, si cela est requis, une authentification 400 de la tranche demandée, puis une interrogation 312 d'une autre entité réseau de sélection d'instance de tranche *NE4,* par exemple l'entité NSSF, afin d'obtenir une information permettant de déterminer l'autorisation de la tranche demandée. A réception de la réponse de l'entité NSSF, l'AMF met en œuvre une étape 320 de vérification de l'autorisation de la tranche demandée. Ensuite, la procédure se poursuit, notamment avec une sélection de l'entité réseau de contrôle de session *NE2* (par exemple SMF).

La Fig. 3f illustre la situation où la vérification de l'autorisation d'une tranche est effectuée par une entité réseau *NE2,* par exemple une entité réseau de de contrôle de session SMF, après l'authentification de tranche effectuée par une entité réseau *NE1,* par exemple une entité de contrôle d'accès AMF. Ainsi, cette entité AMF reçoit lors d'une étape 300 une requête d'activation d'une session de données paquet en provenance du terminal utilisateur *(UE1)* pour une tranche du réseau et met en œuvre, si cela est requis, une authentification 400 de la tranche demandée, puis l'AMF transmet, lors d'une étape 300', la requête d'activation d'une session de données paquet au SMF (préalablement sélectionné). C'est ensuite l'entité SMF qui met en œuvre une interrogation 312 d'une autre entité réseau de sélection d'instance de tranche *NE4,* par exemple l'entité NSSF, afin d'obtenir une information permettant de déterminer l'autorisation de la tranche demandée. A réception de la réponse de l'entité NSSF, l'entité SMF met en œuvre une étape 320 de vérification de l'autorisation de la tranche demandée. Ensuite, la procédure se poursuit, notamment avec la réponse de l'entité SMF à la requête 300' transmise par l'AMF (i.e. acceptation ou non de la requête d'activation).

Enfin, la Fig. 3g illustre la situation où la vérification de l'autorisation d'une tranche est effectuée par une entité réseau *NE2,* par exemple une entité réseau de de contrôle de session SMF, après l'authentification de tranche effectuée par la même entité SMF. Pour ce faire, la requête d'activation d'une session de données paquet en provenance du terminal utilisateur *(UE1)* pour une tranche du réseau, reçue par l'entité réseau *NE1,* par exemple l'entité de contrôle d'accès AMF, est transmise lors d'une étape 300', au SMF (préalablement sélectionné). C'est ensuite l'entité SMF qui met en œuvre, si cela est requis, une authentification 400 de la tranche demandée, puis une interrogation 312 d'une autre entité réseau de sélection d'instance de tranche *NE4,* par exemple l'entité NSSF, afin d'obtenir une information permettant de déterminer l'autorisation de la tranche demandée. A réception de la réponse de l'entité NSSF, l'entité SMF met en œuvre une étape 320 de vérification de l'autorisation de la tranche demandée. Ensuite, la procédure se poursuit, notamment avec la réponse de l'entité SMF à la requête 300' transmise par l'AMF (i.e. acceptation ou non de la requête d'activation).

On comprend que dans tous les modes et variantes de réalisation de la procédure de gestion d'une demande d'activation de session de données paquet selon l'invention, la requête d'activation émise par un terminal déclenche dans un équipement réseau la vérification de l'autorisation de la tranche correspondante, contrairement à la technique antérieure où seule une requête d'enregistrement déclenche une telle vérification.

## Revendications

1. Procédé de gestion de demande d'activation d'une session de données paquet pour un terminal utilisateur (*UE1*) apte à émettre et recevoir des données sur un réseau de communications organisé en tranches de réseau, le terminal utilisateur comprenant un identifiant de souscription pour au moins une des tranches du réseau, le procédé étant mis en œuvre par un au moins un équipement réseau (*NE1*)*,* et comprenant
- une réception (300) d'une requête d'activation d'une session de données paquet en provenance du terminal utilisateur (*UE1*) pour une tranche du réseau, la requête d'activation comprenant un identifiant de la tranche demandée *(Sli),* obtenu à partir d'un paramètre comprenant un ou plusieurs identifiants de tranche(s) souscrite(s) par l'utilisateur, la requête d'activation étant indépendante d'une autorisation ou d'un rejet de la tranche demandée (*Sli*) déterminé(e) lors de l'enregistrement du terminal utilisateur auprès du réseau ;
- une obtention (310), à partir de l'identifiant de souscription, d'au moins une information permettant de déterminer une autorisation de la tranche demandée (*Sli*) ;
- une vérification (320) d'autorisation de la tranche demandée (*Sli*) en tenant compte de l'au moins une information permettant de déterminer une autorisation de la tranche demandée obtenue et, si la vérification est négative, un rejet de la requête d'activation d'une session de données paquet pour la tranche demandée (*Sli*), la vérification étant déclenchée par la requête d'activation.

2. Procédé de gestion de demande d'activation d'une session de données paquet pour un terminal selon la revendication 1, où la vérification d'autorisation de la tranche demandée tient compte galement d'au moins une donnée relative à une localisation courante du terminal utilisateur et/ou un type d'accès utilisé par le terminal utilisateur.

3. Procédé de gestion de demande d'activation d'une session de données paquet selon la revendication 1, comprenant, si la vérification d'autorisation de la tranche est positive et si une donnée de souscription comprend un indicateur requérant l'authentification de la tranche autorisée, une authentification de la tranche autorisée, et
- si l'authentification est positive, une poursuite de la procédure de gestion de demande d'activation de la session de données paquet pour la tranche autorisée ;
- si l'authentification est négative, un rejet de la requête d'activation d'une session de données paquet pour la tranche autorisée.

4. Procédé de gestion de demande d'activation d'une session de données paquet selon la revendication 1, comprenant, avant la vérification d'autorisation de la tranche et si une donnée de souscription comprend un indicateur requérant l'authentification de la tranche, une authentification de la tranche demandée, et si l'authentification est négative, un rejet de la requête d'activation d'une session de données paquet pour la tranche demandée.

5. Procédé de gestion de demande d'activation d'une session de données paquet selon la revendication 1, où l'obtention comprend une émission d'une requête d'interrogation à destination d'un équipement réseau de gestion de données de souscription, la requête comprenant l'identifiant de souscription, et une réception d'une réponse de l'équipement réseau de gestion de données de souscription comprenant l'au moins une information permettant de déterminer une autorisation de la tranche demandée *(Sli).*

6. Procédé de gestion de demande d'activation d'une session de données paquet selon la revendication 1, où la vérification d'autorisation de la tranche comprend une émission d'une requête d'interrogation à destination d'un équipement réseau de sélection d'instance de tranche, la requête comprenant au moins l'identifiant de la tranche demandée et une donnée de souscription comprenant les identifiants des tranches souscrites, et une réception d'une réponse de l'équipement réseau de sélection d'instance de tranche comprenant une information représentative d'une autorisation ou d'un rejet pour la tranche demandée.

7. Procédé de gestion de demande d'activation d'une session de données paquet selon la revendication 1, où l'autorisation de la tranche est suivie d'une sélection d'un équipement réseau de contrôle de session et d'un contrôle, par l'équipement réseau de contrôle de session sélectionné, de la validité de la requête d'activation d'une session de données paquet pour le terminal utilisateur et la tranche autorisée, tenant compte de l'au moins une donnée de souscription et d'une politique locale de l'équipement réseau de contrôle de session sélectionné.

8. Dispositif de gestion de demande d'activation d'une session de données paquet pour un terminal utilisateur (*UE1*) apte à émettre et recevoir des données sur un réseau de communications organisé en tranches de réseau, le terminal utilisateur comprenant un identifiant de souscription pour au moins une des tranches du réseau, le dispositif étant mis en œuvre par un au moins un équipement réseau (*NE1*)*,* et comprenant un récepteur, un émetteur, un processeur et une mémoire couplée au processeur avec des instructions destinées à être exécutées par le processeur pour:
- recevoir une requête d'activation d'une session de données paquet en provenance du terminal utilisateur (*UE1*) pour une tranche du réseau, la requête d'activation comprenant un identifiant de la tranche demandée (*Sli*), obtenu à partir d'un paramètre comprenant un ou plusieurs identifiants de tranche(s) souscrite(s) par l'utilisateur, la requête d'activation étant indépendante d'une autorisation ou d'un rejet de la tranche demandée (*Sli*) déterminé(e) lors de l'enregistrement du terminal utilisateur auprès du réseau ;
- obtenir, à partir de l'identifiant de souscription, d'au moins une information permettant de déterminer une autorisation de la tranche demandée (*Sli*) ;
- vérifier l'autorisation de la tranche demandée (*Sli*) en tenant compte de l'au moins une information permettant de déterminer une autorisation de la tranche demandée obtenue et, si la vérification est négative, un rejet de la requête d'activation d'une session de données paquet pour la tranche demandée *(Sli),* la vérification étant déclenchée par la requête d'activation.

9. Programme d'ordinateur comprenant des instructions qui, lorsque ces instructions sont exécutées par un processeur, conduisent celui-ci à mettre en œuvre les étapes du procédé de gestion de demande d'activation d'une session de données paquet, selon la revendication 1.

10. Support d'informations lisible par un équipement de réseau, et comportant des instructions d'un programme d'ordinateur conforme à la revendication 9.

## Patentansprüche

1. Verfahren zur Verwaltung einer Anfrage zur Aktivierung einer Paketdatensitzung für ein Benutzerendgerät (UE1), das geeignet ist, Daten in einem Kommunikationsnetz, das in Netzwerk-Slices organisiert ist, zu senden und zu empfangen, wobei das Benutzerendgerät eine Abonnementkennung für mindestens eine der Slices des Netzwerks umfasst, wobei das Verfahren von mindestens einer Netzwerkeinrichtung (NE1) implementiert wird und umfasst
- ein Empfangen (300) einer Anforderung zur Aktivierung einer Paketdatensitzung von dem Benutzerendgerät (UE1) für eine Slice des Netzwerks, wobei die Aktivierungsanforderung eine Kennung der angeforderten Slice (Sli) umfasst, die ausgehend von einem Parameter erhalten wird, der eine oder mehrere Kennungen von Slices umfasst, die von dem Benutzer abonniert wurden, wobei die Aktivierungsanforderung unabhängig von einer Autorisierung oder von einer Ablehnung der angeforderten Slice (Sli) ist, die bei der Registrierung des Benutzerendgeräts bei dem Netzwerk bestimmt wurde;
- ein Erhalten (310), ausgehend von der Abonnementkennung, mindestens eine Information, die es ermöglicht, eine Autorisierung der angeforderten Slice (Sli) zu bestimmen;
- eine Überprüfung (320) einer Autorisierung der angeforderten Slice (Sli) unter Berücksichtigung der mindestens einen erhaltenen Information, die es ermöglicht, eine Autorisierung der angeforderten Slice zu bestimmen, und, wenn die Überprüfung negativ ist, eine Ablehnung der Anforderung zur Aktivierung einer Paketdatensitzung für die angeforderte Slice (Sli), wobei die Überprüfung durch die Aktivierungsanforderung ausgelöst wird.

2. Verfahren zur Verwaltung einer Anfrage zur Aktivierung einer Paketdatensitzung für ein Endgerät nach Anspruch 1, wobei die Überprüfung der Autorisierung der angeforderten Slice auch mindestens ein Datenelement berücksichtigt, das sich auf einen aktuellen Standort des Benutzerendgeräts und/oder eine von dem Benutzerendgerät verwendete Zugangsart bezieht.

3. Verfahren zur Verwaltung einer Anfrage zur Aktivierung einer Paketdatensitzung nach Anspruch 1, umfassend, wenn die Überprüfung der Autorisierung der Slice positiv ist und wenn ein Abonnementdatenelement einen Indikator umfasst, der die Authentifizierung der autorisierten Slice anfordert, eine Authentifizierung der autorisierten Slice, und
- wenn die Authentifizierung positiv ist, eine Fortsetzung des Verfahrens zur Verwaltung einer Anfrage zur Aktivierung der Paketdatensitzung für die autorisierte Slice;
- wenn die Authentifizierung negativ ist, eine Ablehnung der Anforderung zur Aktivierung einer Paketdatensitzung für die autorisierte Slice.

4. Verfahren zur Verwaltung einer Anfrage zur Aktivierung einer Paketdatensitzung nach Anspruch 1, umfassend, vor der Überprüfung der Autorisierung der Slice und wenn ein Abonnementdatenelement einen Indikator umfasst, der die Authentifizierung der Slice anfordert, eine Authentifizierung der angeforderten Slice, und wenn die Authentifizierung negativ ist, eine Ablehnung der Anforderung zur Aktivierung einer Paketdatensitzung für die angeforderte Slice.

5. Verfahren zur Verwaltung einer Anfrage zur Aktivierung einer Paketdatensitzung nach Anspruch 1, wobei das Erhalten ein Senden einer Abfrageanforderung an eine Netzwerkeinrichtung zur Verwaltung von Abonnementdaten umfasst, wobei die Anforderung die Abonnementkennung umfasst, und ein Empfangen einer Antwort der Netzwerkeinrichtung zur Verwaltung von Abonnementdaten, die die mindestens eine Information umfasst, die es ermöglicht, eine Autorisierung der angeforderten Slice (Sli) zu bestimmen.

6. Verfahren zur Verwaltung einer Anfrage zur Aktivierung einer Paketdatensitzung nach Anspruch 1, wobei die Überprüfung der Autorisierung der Slice ein Senden einer Abfrageanforderung an eine Netzwerkeinrichtung zum Auswählen einer Slice-Instanz umfasst, wobei die Anforderung mindestens die Kennung der angeforderten Slice umfasst und ein Abonnementdatenelement, das die Kennungen der abonnierten Slices umfasst, und ein Empfangen einer Antwort der Netzwerkeinrichtung zum Auswählen einer Slice-Instanz, die eine Information enthält, die für eine Autorisierung oder eine Ablehnung für die angeforderte Slice repräsentativ ist.

7. Verfahren zur Verwaltung einer Anfrage zur Aktivierung einer Paketdatensitzung nach Anspruch 1, wobei auf die Autorisierung der Slice eine Auswahl einer Netzwerkeinrichtung zur Sitzungskontrolle und eine Kontrolle, durch die ausgewählte Netzwerkeinrichtung zur Sitzungskontrolle, der Gültigkeit der Anforderung zur Aktivierung einer Paketdatensitzung für das Benutzerendgerät und die autorisierte Slice folgt, wobei das mindestens eine Abonnementdatenelement und eine lokale Politik der ausgewählten Netzwerkeinrichtung zur Sitzungskontrolle berücksichtigt werden.

8. Vorrichtung zur Verwaltung einer Anfrage zur Aktivierung einer Paketdatensitzung für ein Benutzerendgerät (UE1), das geeignet ist, Daten in einem in Netzwerk-Slices organisierten Kommunikationsnetz zu senden und zu empfangen, wobei das Benutzerendgerät eine Abonnementkennung für mindestens eine der Slices des Netzwerks umfasst, wobei die Vorrichtung von mindestens einer Netzwerkeinrichtung (NE1) implementiert wird und einem Empfänger, einen Sender, einen Prozessor und einen mit dem Prozessor gekoppelten Speicher mit zur Ausführung durch den Prozessor bestimmten Anweisungen umfasst zum:
- Empfangen einer Anforderung zur Aktivierung einer Paketdatensitzung von dem Benutzerendgerät (UE1) für eine Slice des Netzwerks, wobei die Aktivierungsanforderung eine Kennung der angeforderten Slice (Sli) umfasst, die ausgehend von einem Parameter erhalten wird, der eine oder mehrere Kennungen von Slices umfasst, die von dem Benutzer abonniert wurden, wobei die Aktivierungsanforderung unabhängig von einer Autorisierung oder von einer Ablehnung der angeforderten Slice (Sli) ist, die bei der Registrierung des Benutzerendgeräts bei dem Netzwerk bestimmt wurde;
- Erhalten, ausgehend von der Abonnementkennung, mindestens eine Information, die es ermöglicht, eine Autorisierung der angeforderten Slice (Sli) zu bestimmen;
- Überprüfen einer Autorisierung der angeforderten Slice (Sli) unter Berücksichtigung der mindestens einen erhaltenen Information, die es ermöglicht, eine Autorisierung der angeforderten Slice zu bestimmen, und, wenn die Überprüfung negativ ist, eine Ablehnung der Anforderung zur Aktivierung einer Paketdatensitzung für die angeforderte Slice (Sli), wobei die Überprüfung durch die Aktivierungsanforderung ausgelöst wird.

9. Computerprogramm, das Anweisungen umfasst, die, wenn diese Anweisungen von einem Prozessor ausgeführt werden, diesen dazu veranlassen, die Schritte des Verfahrens zur Verwaltung einer Anfrage zur Aktivierung einer Paketdatensitzung nach Anspruch 1 zu implementieren.

10. Datenträger, der von einer Netzwerkeinrichtung gelesen werden kann und Anweisungen eines Computerprogramms nach Anspruch 9 beinhaltet.

## Claims

1. Method of management of request for activation of a packet data session for a user terminal (UE1) capable of sending and receiving data over a communications network organized into network slices, the user terminal comprising a subscription identifier for at least one of the network slices, the method being implemented by at least one network equipment (NE1), and comprising
- reception (300) of a request for activation of a packet data session from the user terminal (UE1) for a network slice, the activation request comprising an identifier of the requested slice (Sli), which identifier is obtained from a parameter comprising one or more identifiers of one or more slices subscribed to by the user, the activation request being independent of an authorization or rejection of the requested slice (Sli) determined during registration of the user terminal with the network;
- obtainment (310), from the subscription identifier, of at least one piece of information making it possible to determine an authorization of the requested slice (Sli);
- verification (320) of authorization of the requested slice (Sli) taking into account at least one piece of information making it possible to determine an authorization of the requested slice obtained and, if the verification is negative, rejection of the request for activation of a packet data session for the requested slice (Sli), the verification being triggered by the activation request.

2. Method of management of request for activation of a packet data session for a terminal according to Claim 1, wherein the verification of authorization of the requested slice also takes into account at least one datum relating to a current location of the user terminal and/or a type of access used by the user terminal.

3. Method of management of request for activation of a packet data session according to Claim 1, comprising, if the verification of authorization of the slice is positive and if a subscription datum comprises an indicator requiring authentication of the authorized slice, authentication of the authorized slice, and
- if the authentication is positive, continuation of the procedure of management of request for activation of the packet data session for the authorized slice;
- if the authentication is negative, rejection of the request for activation of a packet data session for the authorized slice.

4. Method of management of request for activation of a packet data session according to Claim 1, comprising, prior to verification of authorization of the slice and if a subscription datum comprises an indicator requiring authentication of the slice, authentication of the requested slice, and if the authentication is negative, rejection of the request for activation of a packet data session for the requested slice.

5. Method of management of request for activation of a packet data session according to Claim 1, wherein the obtainment comprises sending an interrogation request to a network equipment for subscription data management, the request comprising the subscription identifier, and receiving a response from the network equipment for subscription data management comprising the at least one piece of information making it possible to determine an authorization of the requested slice (Sli).

6. Method of management of request for activation of a packet data session according to Claim 1, wherein the verification of authorization of the slice comprises sending an interrogation request to a network equipment for slice instance selection, the request comprising at least the identifier of the requested slice and a subscription datum comprising the identifiers of the slices subscribed to, and receiving a response from the network equipment for slice instance selection comprising a piece of information representative of an authorization or rejection for the requested slice.

7. Method of management of request for activation of a packet data session according to Claim 1, wherein authorization of the slice is followed by selection of a network equipment for session control and by inspection, by the selected network equipment for session control, of the validity of the request for activation of a packet data session for the user terminal and the authorized slice, taking into account the at least one subscription datum and a local policy of the selected network equipment for session control.

8. Device for management of request for activation of a packet data session for a user terminal (UE1) capable of sending and receiving data over a communications network organized into network slices, the user terminal comprising a subscription identifier for at least one of the network slices, the device being implemented by at least one network equipment (NE1), and comprising a receiver, a sender, a processor and a memory that is coupled to the processor with instructions that are intended to be executed by the processor with a view to:
- reception of a request for activation of a packet data session from the user terminal (UE1) for a network slice, the activation request comprising an identifier of the requested slice (Sli), which identifier is obtained from a parameter comprising one or more identifiers of one or more slices subscribed to by the user, the activation request being independent of an authorization or rejection of the requested slice (Sli) determined during registration of the user terminal with the network;
- obtainment, from the subscription identifier, of at least one piece of information making it possible to determine an authorization of the requested slice (Sli);
- verification of authorization of the requested slice (Sli) taking into account at least one piece of information making it possible to determine an authorization of the requested slice obtained and, if the verification is negative, rejection of the request for activation of a packet data session for the requested slice (Sli), the verification being triggered by the activation request.

9. Computer program comprising instructions that, when these instructions are executed by a processor, cause the latter to implement the steps of method of management of request for activation of a packet data session, according to Claim 1.

10. Information medium that is readable by a network equipment, and comprises instructions of a computer program according to Claim 9.
